# DEMANDE DE BREVET EUROPEEN

(11) **EP 2 584 537 A1**
(43) Date de publication de la demande: **24.04.2013**
(21) Numéro de dépôt: 12186343.5
(22) Date de dépôt: 27.09.2012
(51) Int. Cl.: G07B 15/02, B60L 11/18

(54) **Procédé de fourniture de service personnalisé à un véhicule**

(30) Priorité: 17.10.2011 EP 11306343
(71) Demandeur: Modulowatt, 75016 Paris (FR)
(72) Inventeur: Aammoun, Samer, 75015 PARIS (FR)
(74) Mandataire: Ilgart, Jean-Christophe

(57) **Abrégé**

L'invention concerne un procédé de fourniture de service personnalisé à un véhicule (V) placé sur un espace de stationnement situé à proximité d'une borne (B) apte à fournir un ensemble de services à un parc de véhicules, le procédé comprenant une étape de détection (1) de véhicule (V) sur l'espace de stationnement, une étape de validation ou non (3) du véhicule détecté sur la base d'une interrogation du véhicule à partir de la borne, caractérisé en ce qu'il comprend, si le véhicule est validé, une étape de fourniture (6) d'au moins un service au véhicule, à partir de la borne, et une pluralité de successions d'étapes de détection de véhicule supplémentaires et d'étapes de validation de véhicule supplémentaires aptes à confirmer ou infirmer la présence du véhicule validé sur la place de stationnement, aussi longtemps qu'au moins un service est fourni au véhicule.

## Description

### Domaine technique et art antérieur

L'invention concerne un procédé de fourniture de service personnalisé à un véhicule stationnant à proximité d'une borne tel que, par exemple, un procédé apte à fournir une autorisation de stationnement à un véhicule automobile sur une place de stationnement prédéterminée.

Dans le cas où le véhicule est un véhicule électrique, l'invention concerne également un procédé apte à fournir de l'énergie électrique à une batterie électrique du véhicule électrique en stationnement sur une place de stationnement prédéterminée.

Des systèmes aptes à gérer le stationnement de véhicules automobiles ou la fourniture d'énergie électrique à des véhicules automobiles électriques sont connus de l'art antérieur.

Pour le stationnement, le système le plus connu consiste en un dispositif de bord de voie qui propose de payer une durée de stationnement au moment de l'arrivée du véhicule. La durée prépayée est souvent présentée sous la forme d'un ticket déposé, par le conducteur lui-même, derrière le pare-brise du véhicule. Les inconvénients de ce type de système résident dans la rigidité d'utilisation. En effet, le système est par nature mono-service (stationnement uniquement), il nécessite une présence physique et des manoeuvres précises du conducteur lors du premier paiement et de toute demande d'extension de la durée de stationnement. Ce côté rigide ne s'adapte pas à la diversité des situations de la vie courante et les conducteurs finissent souvent par payer beaucoup, pas assez ou bien pas du tout. Ce système nécessite également un système de contrôle humain pour verbaliser les véhicules squatters.

Pour pouvoir proposer d'autres services tels que, par exemple, la charge électrique de véhicules électriques, le même système se décline en des bornes individuelles pour chaque place tout en gardant le même schéma de fonctionnement : le conducteur doit se présenter à la borne avec un moyen de paiement, choisir les services (par exemple le type de recharge) et les prépayer. L'IHM (IHM pour «Interface Homme Machine ») de la borne sert donc de témoin de paiement en cas de contrôle. Plus commode que le premier système, cet autre système conserve cependant les mêmes procédures d'identification auprès de la borne, de paiement et de choix de services ainsi que la procédure de contrôle humain.

Il est également connu de l'art antérieur des systèmes de détection automatique de véhicule sur des places de stationnement situées à proximité de bornes (détection par boucle magnétique ou autre). L'identification d'un véhicule qui stationne sur une place de stationnement se fait en présentant à proximité directe de la borne une carte d'identification qui est lue par la borne. Cette carte permet d'identifier le souscripteur du service et d'initialiser le service à fournir au véhicule stationné. La fiabilité de l'information relative à la présence du véhicule sur la place de stationnement repose entièrement sur le système de détection automatique. Dès lors que ce système de détection tombe en panne, il peut être considéré, par exemple, que le véhicule est toujours présent sur la place de stationnement alors même que celui-ci a quitté cette place ou a déjà été remplacé par un autre véhicule. Le comptage de la durée de présence du véhicule sur la place de stationnement est alors erroné.

Le procédé de fourniture de service de l'invention ne présente pas les inconvénients des procédés mentionnés ci-dessus.

### Exposé de l'invention

En effet, l'invention concerne un procédé de fourniture de service personnalisé à un véhicule placé sur un espace de stationnement situé à proximité d'une borne apte à fournir un ensemble de services à un parc de véhicules, le procédé comprenant une étape de détection de véhicule qui délivre un signal de présence de véhicule dès lors qu'un véhicule se positionne sur l'espace de stationnement, une étape d'activation de la borne par le signal de présence de véhicule dès lors qu'un véhicule est détecté à l'étape de détection et, dès lors que la borne est activée, une étape de validation ou non du véhicule détecté, sur la base d'une interrogation du véhicule, à partir de la borne. Le procédé comprend, en outre, si le véhicule est validé à l'étape de validation :
- une étape d'identification du ou des services susceptibles d'être fournis au véhicule parmi l'ensemble des services que la borne est susceptible de fournir,
- une étape d'activation d'au moins un des services identifiés comme susceptibles d'être fournis au véhicule à partir de la borne,
- une étape de fourniture du service activé à l'étape d'activation, et
- une pluralité de successions d'étapes de détection de véhicule supplémentaires et d'étapes de validation de véhicule supplémentaires aptes à confirmer ou infirmer la présence du véhicule validé sur la place de stationnement, aussi longtemps qu'au moins un service est fourni au véhicule.

Selon une caractéristique supplémentaire de l'invention, dès lors qu'une étape de détection de véhicule supplémentaire conduit à délivrer un signal d'absence de véhicule sur l'espace de stationnement alors que les étapes de validation de véhicule supplémentaires conduisent à valider le même véhicule que le véhicule validé à l'étape de validation, le procédé de fourniture de service suit son cours.

Selon une autre caractéristique supplémentaire de l'invention, lorsque les étapes de détection de véhicule supplémentaires conduisent à délivrer un signal de présence de véhicule sur l'espace de stationnement, dès lors qu'une étape de validation de véhicule supplémentaire conduit à valider un véhicule différent du véhicule validé à l'étape de validation, le procédé de fourniture de service est interrompu.

Selon encore une autre caractéristique supplémentaire de l'invention, dès lors qu'un véhicule différent est validé à l'étape de validation supplémentaire, le procédé comprend en outre :
- une étape d'identification du ou des services susceptibles d'être fournis au véhicule différent validé lors de l'étape de validation supplémentaire,
- une étape d'activation d'au moins un des services identifiés à l'étape d'identification du ou des services susceptibles d'être fournis au véhicule différent, et
- une étape de fourniture du service activé au véhicule différent.

Selon encore une autre caractéristique supplémentaire de l'invention, dès lors qu'une étape de détection supplémentaire de véhicule conduit à délivrer un signal d'absence de véhicule et qu'une étape de validation de véhicule supplémentaire conduit à ne valider aucun véhicule, le procédé s'interrompt.

Selon encore une autre caractéristique supplémentaire de l'invention, l'étape de validation ou non du véhicule détecté par interrogation comprend:
- une étape de transfert, à partir de la borne, d'une donnée d'interrogation apte à interroger le véhicule qui stationne sur l'espace de stationnement ;
- si le véhicule appartient au parc de véhicules, une étape de transfert, en réponse à la donnée d'interrogation, à partir du véhicule, d'un signal d'identification qui contient une donnée d'identification apte à identifier le véhicule, et
- une validation du véhicule à partir de la donnée d'identification.

Selon encore une autre caractéristique supplémentaire de l'invention, l'étape d'identification du ou des services susceptibles d'être fournis au véhicule à partir de la borne est mise en oeuvre à partir de données de services personnalisées contenues dans le signal d'identification émis par le véhicule lors de l'étape de validation par interrogation.

Selon encore une autre caractéristique supplémentaire de l'invention, l'étape d'identification du ou des services susceptibles d'être fournis au véhicule à partir de la borne est mise en oeuvre à partir de données de services personnalisées préenregistrées dans la borne. Dans ce cas, les moyens associés au véhicule pour la mise en oeuvre de la validation par interrogation sont réalisés par un badge de type badge de télépéage.

Selon encore une autre caractéristique supplémentaire de l'invention, le procédé comprend, en outre, une étape de comptage de la durée de l'étape de fourniture du service.

Selon encore une autre caractéristique supplémentaire de l'invention, le service identifié qui est activé est une autorisation de stationnement du véhicule auprès de la borne.

Selon encore une autre caractéristique supplémentaire de l'invention, lorsque le véhicule est un véhicule électrique, le service identifié qui est activé est une charge électrique d'une batterie du véhicule électrique, activée dès lors qu'un câble de liaison apte à véhiculer de l'énergie électrique est connecté entre la batterie électrique du véhicule et une alimentation électrique de la borne.

Selon encore une autre caractéristique supplémentaire de l'invention, le véhicule étant un véhicule électrique, un premier service identifié est une autorisation de stationnement du véhicule électrique auprès de la borne qui est activé dès lors que la présence du véhicule est validée et un deuxième service identifié est une charge électrique d'une batterie du véhicule électrique qui est activée dès lors qu'un câble de liaison apte à véhiculer de l'énergie électrique est connecté entre la batterie électrique du véhicule et une alimentation électrique de la borne.

Selon encore une autre caractéristique supplémentaire de l'invention, la quantité d'énergie électrique fournie au véhicule est comptée.

Selon encore une autre caractéristique supplémentaire de l'invention, en l'absence de réponse du véhicule à la donnée d'interrogation, le véhicule n'est pas validé.

Selon encore une autre caractéristique supplémentaire de l'invention, lorsque le véhicule n'est pas validé, un signal de non validation de véhicule est transmis, à partir de la borne, vers une plate-forme de gestion en vue de l'enlèvement du véhicule.

Avantageusement, le procédé de l'invention comprend, aussi longtemps qu'un service est fourni au véhicule, des étapes de détection supplémentaires et des étapes de validation supplémentaire du véhicule.

Ces étapes supplémentaires permettent avantageusement de gérer les éventuels dysfonctionnements du système qui détecte la présence du véhicule sur la place de stationnement. Il est en effet possible que ce système tombe en panne et soit, en conséquence, dans l'impossibilité de détecter le départ et/ou l'arrivée d'un véhicule sur la place de stationnement. Comme cela sera précisé ultérieurement, le procédé de l'invention assure avantageusement une continuité de la fourniture du service en cas de panne du système de détection.

Le procédé de l'invention présente également l'avantage d'agréger des informations concernant le véhicule en stationnement pour proposer à celui-ci des services qui lui sont propres tout en automatisant la procédure de contrôle et le comptage exact des services consommés.

Dans un mode de réalisation particulièrement avantageux, le procédé de l'invention propose de coupler le stationnement du véhicule à d'autres services adaptés au véhicule stationné, par exemple la charge en énergie électrique du véhicule.

Le procédé de l'invention permet aussi l'optimisation de l'exploitation des places de stationnement en mesurant automatiquement la durée de stationnement des véhicules et en détectant les véhicules squatters.

### Brève description des figures

D'autres caractéristiques et avantages de l'invention apparaîtront à la lumière de la description qui va suivre, faite en référence aux figures jointes parmi lesquelles :
- la figure 1 représente un véhicule en approche d'une borne ;
- la figure 2 représente un organigramme du procédé de fourniture de service de l'invention ;
- la figure 3 représente, de façon symbolique, les différents circuits qui sont aptes à mettre en oeuvre le procédé de fourniture de service de l'invention.

Sur toutes les figures, les mêmes références désignent les mêmes éléments.

### Exposé détaillé de modes de réalisation particuliers

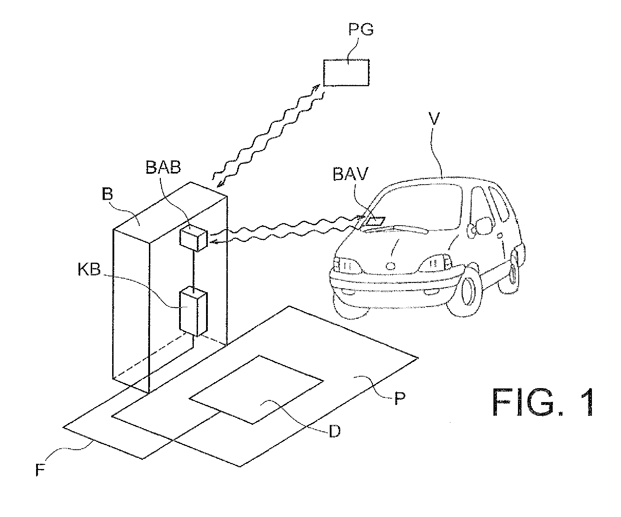

La figure 1 représente un véhicule V en approche d'une borne B. La borne B est placée à proximité d'une place de stationnement P.

La borne B comprend une balise ou un badge de communication BAB et un calculateur KB relié à la balise de communication BAB. Le véhicule V comprend une balise ou un badge de communication BAV apte à communiquer par voie hertzienne avec la balise de communication BAB de la borne. A la place de stationnement P est associé un détecteur D qui est apte à détecter la présence d'un véhicule. Dans le mode de réalisation de l'invention représenté en figure 1, le détecteur D est intégré au niveau du sol de la place de stationnement et est apte à détecter, par exemple par voie magnétique, par voie électromagnétique ou par voie optique, la présence d'un véhicule en stationnement. Le détecteur D est relié au calculateur KB, par exemple par une liaison filaire F. Selon le mode de réalisation préférentiel de l'invention, les balises BAB et BAV sont des balises connues sous le nom de « balises DSRC » (DSRC pour « Dedicated Short-Range Communications ») aptes à émettre et recevoir des ondes électromagnétiques haute fréquence.

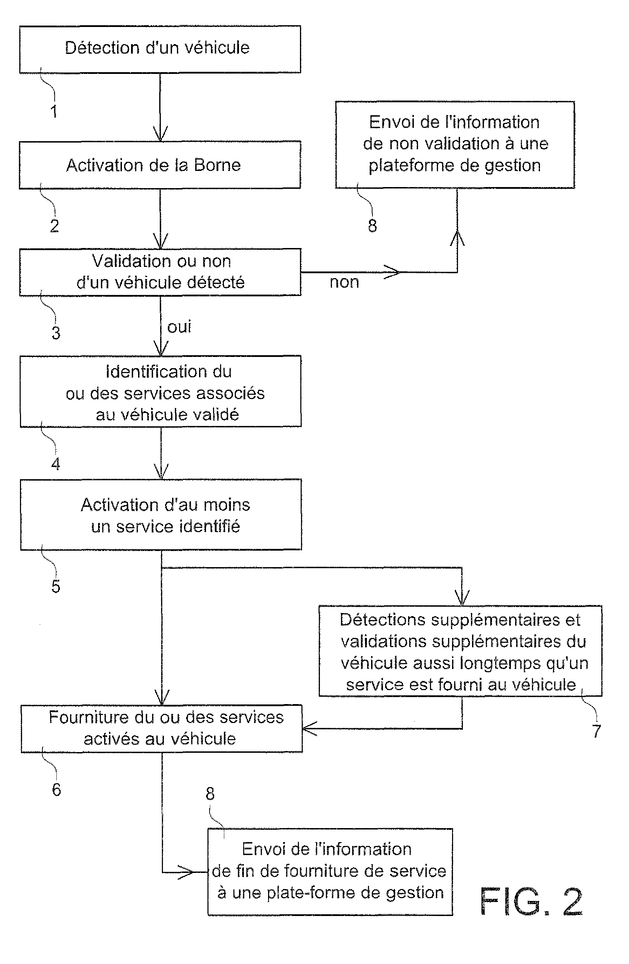

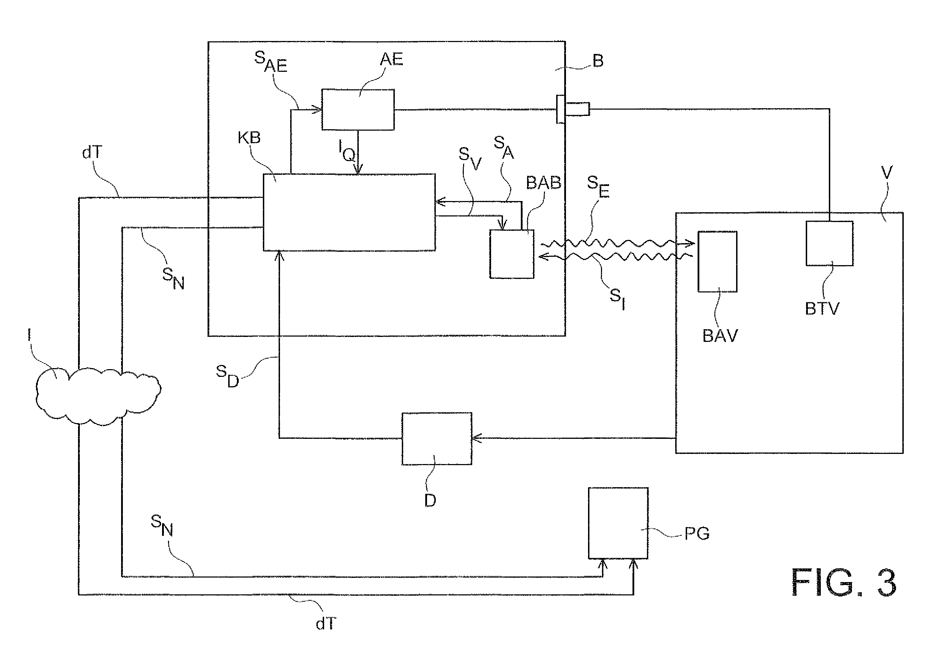

La figure 2 représente un organigramme du procédé de fourniture de services de l'invention et la figure 3 représente, de façon symbolique, dans le cas où le véhicule est un véhicule électrique, les différents circuits qui sont aptes à mettre en oeuvre le procédé de fourniture de services de l'invention.

En plus des circuits mentionnés en référence à la figure 1, la figure 3 représente la batterie électrique BTV que le véhicule contient et l'alimentation électrique AE que contient la borne.

Le procédé de fourniture de service de l'invention comprend les étapes essentielles suivantes :
- une étape 1 de détection de véhicule,
- une étape 2 d'activation de la borne,
- une étape 3 de validation ou non du véhicule détecté,
- une étape 4 d'identification du ou des services susceptibles d'être fournis au véhicule validé,
- une étape 5 d'activation d'au moins un des services identifié comme susceptible d'être fourni au véhicule validé,
- une étape 6 de fourniture du service activé,
- une étape 7 constituée d'une pluralité de détections de véhicule supplémentaires et d'une pluralité de validations de véhicule supplémentaires aussi longtemps qu'un service est fourni au véhicule, et
- une étape 8 d'envoi d'une information de fin de fourniture de service à une plate-forme de gestion dès lors que la fourniture du service est terminée.

En référence à l'étape 3, lorsque le stationnement du véhicule n'est pas validé, le procédé comprend une étape 9 d'envoi de signal de non validation à la plate-forme de gestion en vue de l'enlèvement du véhicule.

La détection 1 du véhicule s'opère à l'aide du détecteur D. Le détecteur D est, par exemple, une boucle magnétique placée dans le sol et apte à détecter la présence d'une masse métallique qui se positionne au-dessus d'elle. Dans d'autres modes de réalisation de l'invention, le détecteur D est, par exemple, une caméra de surveillance ou un radar de surveillance placé, par exemple, dans la borne.

L'activation 2 de la borne est déclenchée par le signal de détection S_{D} que délivre le détecteur D. A cette fin, le signal S_{D} est transmis à un calculateur KB qui est placé dans la borne B.

Dès lors que le calculateur KB reçoit le signal de détection S_{D}, il délivre un signal de présence de véhicule S_{V} qui est transmis à la balise de borne BAB. Le signal de présence S_{V} commande l'émission, par la balise BAB, d'un signal électromagnétique SE en direction du véhicule V en stationnement.

Deux cas se présentent alors : soit le véhicule appartient au parc de véhicules autorisés à recevoir des services en provenance de la borne, soit le véhicule n'appartient pas à ce parc.

Dans ce dernier cas (véhicule non autorisé), il n'y a pas de réponse du véhicule au signal SE car le véhicule n'est pas équipé des circuits aptes à traiter le signal S_{E}. En l'absence de réponse au signal S_{E}, le calculateur KB de la borne B délivre un signal S_{N} qui est transmis, par exemple par un lien Internet I, à une plate-forme de gestion PG. Le signal S_{N} contient des données qui traduisent que la place de stationnement associée à la borne B est indûment occupée. Il est alors possible de faire enlever le véhicule.

Dans le cas où le véhicule est un véhicule autorisé, dès lors que le signal SE est reçu par la balise BAV du véhicule, celle-ci émet un signal d'identification S_{I} en direction de la balise de la borne BAB. Le signal S_{I} contient une donnée d'identification ID apte à identifier le véhicule qui stationne. De façon avantageuse, la donnée ID est différente d'un véhicule à l'autre, permettant ainsi une fourniture de services personnalisés à différents véhicules.

Selon un premier mode de réalisation de l'invention, des données de service représentant l'ensemble des services susceptibles d'être délivrés à chaque véhicule sont préenregistrés dans le calculateur KB. A la réception du signal d'identification S_{I}, la balise de borne BAB délivre alors au calculateur KB un signal S_{A} qui identifie, sur la base du seul identifiant ID du véhicule, le ou les services susceptibles d'être fournis au véhicule. Avantageusement, selon ce premier mode de réalisation de l'invention, la balise BAV du véhicule peut être un simple badge de télépéage.

Selon un deuxième mode de réalisation de l'invention, les données de services qui représentent l'ensemble des services susceptibles d'être délivrés à chaque véhicule sont contenues dans le signal S_{I}. A la réception du signal S_{I}, la balise de borne BAB délivre alors au calculateur KB un signal S_{A} qui identifie, sur la base de l'identifiant ID du véhicule et des données de services contenues dans le signal S_{I}, le ou les services susceptibles d'être fournis au véhicule.

Quel que soit le mode de réalisation de l'invention, dans le cas où l'autorisation de stationner sur la place de stationnement figure parmi les services susceptibles d'être délivrés, le comptage de la durée de stationnement débute. Par ailleurs, tout service apte à être fourni au véhicule à partir de la borne est susceptible d'être activé. Il en est ainsi, par exemple, de la fourniture d'énergie électrique au véhicule si celui-ci est un véhicule électrique. L'alimentation électrique AE de la borne est alors activée par un signal d'activation S_{AE} délivré par le calculateur KB. Il suffit alors au conducteur du véhicule de brancher un câble entre la batterie du véhicule BTV et l'alimentation électrique de la borne pour activer la charge de la batterie du véhicule. La charge de la batterie du véhicule est alors activée, par exemple, à l'aide d'un détecteur d'insertion de prise, dès que le branchement est effectué. La quantité d'énergie électrique fournie au véhicule est alors mesurée par tout système de mesure connu en soi, associé à l'alimentation AE. L'information I_{Q} relative à la quantité d'énergie électrique mesurée est alors transmise au calculateur KB.

Des services autres que l'autorisation de stationnement ou la charge de la batterie du véhicule sont concernés par l'invention (non représentés sur les figures). Ainsi, par exemple, l'invention concerne-telle également la fourniture de données de divertissement telles que des données musicales, de films, etc. Un calculateur de bord du véhicule est alors apte à recevoir les données de divertissement par tout moyen connu en soi, par exemple en utilisant une communication filaire sur le câble de recharge électrique, après que demande en a été faite au calculateur de la borne.

La quantité de chaque service fourni au véhicule étant mesurée (mesure de la durée du stationnement, de la quantité d'électricité fournie, du nombre de plages musicales distribuées, etc.), chaque service fourni au véhicule peut être facturé au propriétaire du véhicule.

Le calculateur KB de la borne B calcule à cette fin des données tarifaires dT qui correspondent aux coûts des différents services fournis. Dans le cadre de l'invention, il est avantageusement possible de moduler les données tarifaires dT en proposant, par exemple, des tarifs différents pour des combinaisons de services différentes. A titre d'exemple non limitatif, le tarif associé au stationnement du véhicule peut ainsi être divisé par deux pendant la durée où le véhicule électrique est en charge.

Selon l'invention, la présence du véhicule validé est questionnée périodiquement, aussi longtemps qu'un service est fourni au véhicule. Ce questionnement périodique est réalisé à l'aide des étapes de détection et de validation supplémentaires.

Si, durant ces étapes de détection et de validation supplémentaires, le signal S_{D} et le signal S_{I} qui provient du véhicule validé sont délivrés périodiquement, la fourniture du ou des services requis par le véhicule se déroule normalement. Dès lors que le véhicule quitte la place de stationnement, une information S_{N} de fin de fourniture de service ainsi que les données de comptage du ou des services qui ont été fournis, par exemple les données tarifaires dT, sont transmises, par exemple par lien Internet I, à la plate-forme de gestion PG. La borne est également désactivée.

Un avantage du procédé de l'invention est de permettre la continuité de la fourniture de services en cas de dysfonctionnement du système de détection D.

En effet, si le détecteur D ne délivre plus de signal de présence de véhicule alors même que le signal S_{I} qui provient du véhicule validé continue à être délivré, la fourniture du service se poursuit. Il est alors possible, sur la base de l'information d'absence de signal S_{D}, d'informer la plate-forme de gestion d'une panne du détecteur D.

De même, si le détecteur D délivre toujours des signaux de présence de véhicule, alors que le signal d'identification S_{I} est modifié et correspond à un véhicule différent du véhicule précédent, le procédé de l'invention arrête la fourniture de service en cours et initialise la ou les fournitures de service requises par le nouveau véhicule. La continuité du service fourni à un véhicule présent sur la place de stationnement est encore ici assurée. Il est ici également possible d'informer la plate-forme de gestion d'une panne du détecteur D, par exemple sur la base de l'arrêt de la fourniture de service précédente.

## Revendications

1. Procédé de fourniture de service personnalisé à un véhicule (V) placé sur un espace de stationnement situé à proximité d'une borne (B) apte à fournir un ensemble de services à un parc de véhicules, le procédé comprenant une étape de détection (1) de véhicule (V) qui délivre un signal de présence de véhicule (S_{D}) dès lors qu'un véhicule se positionne sur l'espace de stationnement, une étape d'activation (2) de la borne par le signal de présence de véhicule dès lors qu'un véhicule est détecté à l'étape de détection et, dès lors que la borne est activée, une étape de validation ou non (3) du véhicule détecté, sur la base d'une interrogation du véhicule à partir de la borne, **caractérisé en ce qu'il** comprend, en outre, si le véhicule est validé à l'étape de validation :
- une étape d'identification (4) du ou des services susceptibles d'être fournis au véhicule parmi l'ensemble des services que la borne est susceptible de fournir,
- une étape d'activation (5) d'au moins un des services identifiés comme susceptibles d'être fournis au véhicule à partir de la borne,
- une étape de fourniture (6) du service activé à l'étape d'activation (5), et
- une pluralité de successions d'étapes de détection de véhicule supplémentaires et d'étapes de validation de véhicule supplémentaires aptes à confirmer ou infirmer la présence du véhicule validé sur la place de stationnement, aussi longtemps qu'au moins un service est fourni au véhicule.

2. Procédé selon la revendication 1, dans lequel, dès lors qu'une étape de détection de véhicule supplémentaire conduit à délivrer un signal d'absence de véhicule sur l'espace de stationnement alors que les étapes de validation de véhicule supplémentaires conduisent à valider le même véhicule que le véhicule validé à l'étape de validation, le procédé de fourniture de service suit son cours.

3. Procédé selon la revendication 1, dans lequel, lorsque les étapes de détection de véhicule supplémentaires conduisent à délivrer un signal de présence de véhicule sur l'espace de stationnement, dès lors qu'une étape de validation de véhicule supplémentaire conduit à valider un véhicule différent du véhicule validé à l'étape de validation, le procédé de fourniture de service est interrompu.

4. Procédé selon la revendication 3, dans lequel, dès lors qu'un véhicule différent est validé à l'étape de validation supplémentaire, le procédé comprend en outre :
- une étape d'identification du ou des services susceptibles d'être fournis au véhicule différent validé lors de l'étape de validation supplémentaire,
- une étape d'activation d'au moins un des services identifiés à l'étape d'identification du ou des services susceptibles d'être fournis au véhicule différent validé, et
- une étape de fourniture du service activé au véhicule différent.

5. Procédé selon la revendication 1, dans lequel, dès lors qu'une étape de détection supplémentaire de véhicule conduit à délivrer un signal d'absence de véhicule et qu'une étape de validation de véhicule supplémentaire conduit à ne valider aucun véhicule, le procédé s'interrompt.

6. Procédé selon l'une quelconque des revendications précédentes, dans lequel l'étape de validation ou non (3) de la présence d'un véhicule par interrogation comprend:
- une étape de transfert, à partir de la borne, d'une donnée d'interrogation (SE) apte à interroger le véhicule qui stationne sur l'espace de stationnement ;
- si le véhicule appartient au parc de véhicules, une étape de transfert, en réponse à la donnée d'interrogation, à partir du véhicule, d'un signal d'identification (S_{I}) qui contient une donnée d'identification (ID) apte à identifier le véhicule, et
- une validation du véhicule à partir de la donnée d'identification (ID).

7. Procédé selon la revendication 6, dans lequel l'étape d'identification du ou des services susceptibles d'être fournis au véhicule à partir de la borne est mise en oeuvre à partir de données de services personnalisées contenues dans le signal d'identification (S_{I}) émis par le véhicule lors de l'étape de validation par interrogation.

8. Procédé selon la revendication 6, dans lequel l'étape d'identification du ou des services susceptibles d'être fournis au véhicule à partir de la borne est mise en oeuvre à partir de données de services personnalisées préenregistrées dans la borne.

9. Procédé selon la revendication 8, dans lequel les moyens associés au véhicule pour la mise en oeuvre de la validation du véhicule par interrogation sont réalisés par un badge de type badge de télépéage.

10. Procédé selon l'une quelconque des revendications précédentes et qui comprend, en outre, une étape de comptage de la durée de l'étape de fourniture du service.

11. Procédé selon l'une quelconque des revendications précédentes, dans lequel le service identifié qui est activé est une autorisation de stationnement du véhicule auprès de la borne.

12. Procédé selon l'une des revendications 1 à 10, dans lequel, lorsque le véhicule est un véhicule électrique, le service identifié qui est activé est une charge électrique d'une batterie du véhicule électrique (BTV), activée dès lors qu'un câble de liaison apte à véhiculer de l'énergie électrique est connecté entre la batterie électrique du véhicule (BTV) et une alimentation électrique (AE) de la borne.

13. Procédé selon l'une quelconque des revendications 1 à 10, dans lequel, le véhicule étant un véhicule électrique, un premier service identifié est une autorisation de stationnement du véhicule électrique auprès de la borne qui est activé dès lors que la présence du véhicule est validée et un deuxième service identifié est une charge électrique d'une batterie du véhicule électrique qui est activée dès lors qu'un câble de liaison apte à véhiculer de l'énergie électrique est connecté entre la batterie électrique du véhicule (BTV) et une alimentation électrique (AE) de la borne.

14. Procédé selon l'une des revendications 12 ou 13, dans lequel la quantité d'énergie électrique fournie au véhicule est comptée.

15. Procédé selon la revendication 6 dans lequel, en l'absence de réponse du véhicule à la donnée d'interrogation (SE), le véhicule n'est pas validé.

16. Procédé selon la revendication 15 dans lequel, lorsque le véhicule n'est pas validé, un signal de non validation de véhicule est transmis (8), à partir de la borne, vers une plate-forme de gestion (PG) en vue de l'enlèvement du véhicule.
